# EUROPÄISCHE PATENTSCHRIFT

(11) **EP 0 553 617 B1**
(45) Veröffentlichungstag und Bekanntmachung des Hinweises auf die Patenterteilung: **23.07.1997**
(21) Anmeldenummer: 93100178.8
(22) Anmeldetag: 08.01.1993
(51) Int. Cl.: C08J 3/20, C08J 5/04

(54) **Verfahren zur Herstellung füllstoffhaltiger thermoplastischer Formmassen**
Process for preparing filler containing thermoplastic moulding compositions
Procédé pour préparer des compositions de moulage thermoplastiques contenant des agents de charge

(30) Priorität: 25.01.1992 DE 4202004
(43) Veröffentlichungstag der Anmeldung: 04.08.1993
(73) Patentinhaber: BASF Aktiengesellschaft, 67063 Ludwigshafen (DE)
(72) Erfinder: Pipper, Gunter, 6702 Bad Duerkheim (DE); Goetz, Walter, Dr., 6700 Ludwigshafen (DE); Cordes, Claus, Dr., 6719 Weisenheim (DE); Floss, Josef Georg, Dr., 6730 Neustadt (DE); Mattern, Guenter, 6707 Schifferstadt (DE); Hildenbrand, Peter, Dr., 7500 Karlsruhe 51 (DE); Hurley, James, Dr., 6800 Mannheim 31 (DE); Schlichting, Karl, Dr., 6712 Bobenheim-Roxheim (DE); McKee, Graham Edmund, Dr., 6940 Weinheim (DE); Blinne, Gerd, Dr., 6719 Bobenheim (DE)

(56) Entgegenhaltungen:
- EP-A- 0 267 646
- EP-A- 0 475 087
- DD-A- 282 660

## Beschreibung

Die vorliegende Erfindung betrifft ein Verfahren zur Herstellung füllstoffhaltiger thermoplastischer Formmassen durch Abmischung von Füllstoffen mit Thermoplasten in der Schmelze.

Außerdem betrifft die Erfindung nach dem Verfahren erhältliche thermoplastische Formmassen.

Thermoplastische Formmassen auf der Basis von beispielsweise Polyamiden oder Polyestern mit Füllstoffen sind an sich bekannt und in der Literatur beschrieben.

So beschreiben die CH-A 453 666 und die US-A 4 255 317 die Einarbeitung von Glasfasern in Thermoplastschmelzen, wobei die Glasfasern infolge der Scherung bei der Einarbeitung auf dem Extruder auf Längen von weniger als 0,3 mm verkürzt werden. Eine Verringerung der Scherung ist nicht möglich, da dann die eingesetzten Glasfaserbündel nicht zu Einzelfasern dispergiert werden. Die Herstellung von Granulaten mit größerer Faserlänge ist beispielsweise nach dem Verfahren gemäß EP-A 56 703 möglich, nach welchen Glasfaserrovings mit der Schmelze eines Thermoplasten imprägniert werden und das so erhaltene Produkt anschließend geschnitten wird. Nach diesem Verfahren erhält man Granulate, in welchen die Faserlänge der Granulatlänge entspricht.

In der EP-A 475 087, die Stand der Technik nach Art. 54(3) darstellt, wird ein Verfahren zur Herstellung von verstärktem Polytetramethylenadipamid beschrieben, wobei erwähnt wird, daß Verstärkungsmittel in ein Polyamid mit einer relativen Viskosität von 2,38 eingearbeitet werden und das so erhaltene Produkt einer Nachkodensation in fester Phase unterworfen wird.

Gegenstand der EP-A 267 646 ist ein Verfahren zur Herstellung von Formkörpern aus Polyamid-4,6, wobei der Formkörper nach Herstellung einer Nachkondensation in fester Phase unterworfen wird. In Beispiel 3 werden Abmischungen aus 30 Gew.-% eines Polyamid-4,6 und 70 Gew.-% Ton auf einem Extruder hergestellt.

Dieses Schmelzimprägnierverfahren ist jedoch verfahrenstechnisch sehr aufwendig und hat sich daher in der Praxis nicht durchsetzen können.

Nach dem sogenannten RIM-Verfahren (Reaction Injection Moulding) ist es möglich, durch Dispergieren von Schnittfasern im Monomeren und anschließende Polymerisation des Monomeren ebenfalls Formmassen mit langen Glasfasern zu erhalten. Dieses Verfahren ist aber auf spezielle, nach dem RIM-Verfahren polymerisierbare Monomere beschränkt und verfahrenstechnisch aufwendig. Speziell bei Polyamiden auf Lactam-Basis, die nach diesem Verfahren hergestellt wurden, treten Probleme mit Restmonomeren auf, die nur schwer aus dem Produkt zu entfernen sind und die mechanischen Eigenschaften nachteilig beeinflussen.

Die Einarbeitung teilchenförmiger Füllstoffe in Thermoplaste erfolgt heute im allgemeinen durch Abmischen des Thermoplastgranulats mit dem Füllstoff in der Schmelze in einer geeigneten Mischvorrichtung. Dieses Verfahren erfordert insgesamt ein zweimaliges Aufschmelzen und Granulieren des Thermoplasten unter Scherung, was zum einen kostenaufwendig ist und sich zum anderen nachteilig auf die mechanischen Eigenschaften auswirkt.

Der vorliegenden Erfindung lag daher die Aufgabe zugrunde, ein verfahrenstechnisch einfach durchzuführendes Verfahren zur Verfügung zu stellen, nach welchem die vorstehend geschilderten Nachteile vermieden werden können.

Diese Aufgabe wird erfindungsgemäß durch das Verfahren gemäß Anspruch 1 gelöst, wobei
a) die Füllstoffe in einer Mischvorrichtung in der Schmelze mit einem niedermolekularen Thermoplasten mit einer Schmelzviskosität von maximal 30 Pas (gemessen bei einer Temperatur von 20°C über dem Schmelzpunkt des Thermoplasten und einem Schergefälle von 1 000 s⁻¹) mischt,
b) das so erhaltene Produkt aus der Mischvorrichtung austrägt, abkühlt und zerkleinert und
c) anschließend das zerkleinerte Produkt in fester Phase einer Nachkondensation unterwirft.

Nach diesem Verfahren sind auf einfache Weise faserverstärkte Formmassen mit hoher Faserlänge und damit verbunden guten mechanischen Eigenschaften zugänglich. Weiterhin wird die Scherbelastung des Polymeren gegenüber den Verfahren nach dem Stand der Technik verringert.

In der ersten Stufe des erfindungsgemäßen Verfahrens werden die Füllstoffe in einer geeigneten Mischvorrichtung in die Schmelze eines niedermolekularen Thermoplasten eingebracht.

Das Molekulargewicht des Thermoplasten wird dabei so gewählt, daß dessen Schmelzviskosität, gemessen bei einer Temperatur von 20°C über dem der Schmelztemperatur, nicht mehr als 30 Pas, vorzugsweise nicht mehr als 18 Pas beträgt.

Als Thermoplaste eignen sich dabei grundsätzlich alle, deren Molekulargewicht durch thermische Behandlung in fester Phase erhöht werden kann, vorzugsweise jedoch Polyamide, Polyester und flüssigkristalline Polyester.

Derartige Polymere sind dem Fachmann bekannt und in der Literatur vielfach beschrieben, so daß sich hier detaillierte Angaben erübrigen.

Polyamide, Polyester und flüssigkristalline Polyester sind sogenannte Polykondensate, d.h. Polymere, die durch Kondensation aus Monomeren unter Abspaltung niedermolekularer Verbindungen hergestellt werden.

Solche Verfahren sind dem Fachmann bekannt und vielfach in der Literatur beschrieben, so daß sich auch hierzu detaillierte Angaben erübrigen.

Ganz allgemein läßt sich bei derartigen Herstellungsverfahren das Molekulargewicht (und damit die Schmelzviskosität) auf verschiedene Weise steuern.

Eine Möglichkeit ist das Abbrechen der Polykondensation nach einer relativ kurzen Reaktionszeit, was am einfachsten durch Abkühlen der Reaktionsmischung erfolgen kann.

Eine andere Möglichkeit liegt in der Zugabe von sogenannten "Molekulargewichtsreglern"; in der Regel sind dies monofunktionelle Verbindungen, die die Polykondensationsreaktion dadurch zum Abbruch bringen, daß nach ihrem Einbau keine funktionelle Gruppe mehr am Kettenende vorhanden ist, die der weiteren Kondensation zugänglich ist. Bekannte Beispiele für Molekulargewichtsregler sind beispielsweise Monocarbonsäuren oder Monoalkohole bzw. Monoamine, die üblicherweise bei der Herstellung von Polyamiden und Polyestern eingesetzt werden.

Schließlich ist als Möglichkeit der Molekulargewichtsregelung bei Polykondensationen noch die Steuerung über das Molverhältnis der Ausgangsmonomeren zu nennen. Bekanntlich hängt das maximal zu erreichende Molekulargewicht bei einer Polykondensation vom molaren Verhältnis der bei der Kondensation unter Abspaltung von niedermolekularen Verbindungen miteinander reagierenden Gruppen ab.

Aus dem Vorstehenden wird ersichtlich, daß dem Fachmann Verfahren zur Herstellung von niedermolekularen Thermoplasten mit einer Schmelzviskosität (20°C über ihrer Schmelztemperatur) von maximal 30 Pas bekannt sind.

Für die Herstellung von derartigen Polyamiden eignet sich besonders vorteilhaft das in der EP-A 129 195 und EP-A 129 196 beschriebene Verfahren, für die Herstellung von Polyestern ein verwandtes, in der EP-A 346 735 beschriebenes Verfahren und für die Herstellung von flüssigkristallinen Polymeren ein Verfahren wie es beispielsweise in der EP-A 257 558 beschrieben ist.

Die angegebenen Schmelzviskositäten für den ersten Schritt entsprechen bei Polyamiden und Polyestern einem besonders bevorzugten Bereich der Viskositätszahl VZ von 40 bis 100 ml/g, vorzugsweise 45 bis 80 ml/g und insbesondere von 50 bis 70 ml/g (bei Polyamiden gemessen in 0,5 %iger Lösung in 96 gew.-% H₂SO₄ bei 25°C, bei Polyestern gemessen in 0,5 %iger Lösung in einem Gemisch aus o-Dichlorbenzol und Phenol (Gew.-Verhl. 1:1) bei 25°C).

Bevorzugte Polyamide sind Poly-ε-caprolactam (Polyamid 6), Polyhexamethylenadipinsäureamid (Polyamid 6,6), deren Copolymere sowie teilaromatische Copolyamide auf der Basis von Terephthalsäure, ggf. Isophthalsäure, Adipinsäure, Hexamethylendiamin und ε-Caprolactam, wie sie z.B. in der EP-A 299 444 beschrieben sind.

Bevorzugte Polyester sind Polyalkylenterephthalate, insbesondere Polyethylenterephthalat (PETP) und Polybutylenterephthalat (PBTP).

Bevorzugt werden Polyamide mit etwa äquimolarem Verhältnis der jeweiligen beiden Endgruppen. Bevorzugte flüssigkristalline Polymere sind Produkte wie sie z.B. in der DE-A 20 25 971 und der EP-A 257 558 beschrieben werden.

Als Füllstoffe können prinzipiell alle gängigen, dem Fachmann bekannten Füllstoffe eingesetzt werden.

Bevorzugte Füllstoffe sind beispielsweise Glasfasern, Kohlenstoff-Fasern, Kaliumtitanat-Whiskers, Wollastonit, Glaskugeln, Kaolin, Calciumcarbonat, Talkum oder Glimmer. Vorteilhaft verwendet man Kaolin, Wollastonit oder Glasfasern. Bevorzugt werden Füllstoffe, die mit einem mit dem jeweiligen Thermoplasten reaktiven Silan (z.B. Aminosilane für Polyamide, Epoxysilane für Polyester) vorbehandelt sind. Sofern man Glasfasern verwendet, bevorzugt man solche, die einen Durchmesser von 5 bis 20 µm, insbesondere 8 bis 15 µm aufweisen. Die Glasfasern werden im allgemeinen in Form von Roving oder Schnittfasern angewandt.

Pulverförmige Verstärkungsmittel oder Schnittfasern können mit festem Thermoplasten gemischt und dann beispielsweise in einem Extruder unter Aufschmelzen des Thermoplasten gemischt werden. Vorteilhafter ist es, den Thermoplasten zunächst im Extruder aufzuschmelzen und dann durch eine Zufuhröffnung Fasern oder pulverförmige Füllstoffe zu der Schmelze, deren Temperatur im allgemeinen 10 bis 40°C oberhalb des Schmelzpunkts des Thermoplasten liegt, zuzudosieren. Die Fasern sowie ggf. weitere Zuschlagstoffe werden während des Mischvorgangs im Extruder zerkleinert. Vorteilhaft hält man ein arithmetrisches Mittel der Faserlängenverteilung von größer als 250 µm, insbesondere größer als 300 µm, und gleichzeitig einen Anteil an Fasern über 800 µm von kleiner 1 % ein.

Neben den Füllstoffen können nach dem erfindungsgemäßen Verfahren in der Stufe a) auch die üblichen Zusatzstoffe und Verarbeitungshilfsmittel mit dem Thermoplasten gemischt werden. Hier seien nur beispielsweise Schmiermittel, die Schlagzähigkeit erhöhende Zusätze, Antioxidantien, UV-Stabilisatoren, Flammschutzmittel und Pigmente erwähnt.

Als Mischaggregate können Kneter, statische Mischer, Ein- und Zweiwellenextruder verwendet werden, wobei Zweiwellenextruder bevorzugt werden.

Eine weitere besonders bevorzugte Variante besteht darin, die Füllstoffe und ggf. die weiteren Zusatzstoffe während des Austragens der Schmelze aus dem Polykondensationsgefäß, in der sie hergestellt wurde, einzumischen, ohne sie vor dem Mischen abzukühlen und zu granulieren. Als Polykondensationsgefäße können diskontinuierliche Kessel oder kontinuierlich arbeitende Reaktoren, als Mischaggregate statische Mischer oder Zweiwellenextruder verwendet werden, wobei die Schmelze bevorzugt gleichzeitig mit dem Mischprozeß entgast wird.

Das Mengenverhältnis von Thermoplast zu Füllstoff kann nach dem erfindungsgemäßen Verfahren in einem sehr weiten Rahmen gewählt werden. So können die thermoplastischen Formmassen 5 bis 90, vorzugsweise 10 bis 75 und besonders bevorzugt 20 bis 70 Gew.-% Füllstoffe enthalten.

In der Stufe b) des erfindungsgemäßen Verfahrens werden die in Stufe a) erhaltenen Produkte aus der verwendeten Mischvorrichtung ausgetragen, abgekühlt und zerkleinert.

Bei der bevorzugten Variante unter Verwendung eines Extruders als Mischvorrichtung bedeutet dies, daß die Produkte extrudiert, abgekühlt und granuliert werden, so daß man ein Granulat als Endprodukt der Stufe b) erhält. Grundsätzlich ist jedoch auch jede andere Art der Zerkleinerung möglich, die zu einem Produkt führt, welches eine ausreichende Oberfläche hat, um in Stufe c) der thermischen Nachkondensation in fester Phase unterworfen werden zu können.

In der letzten Stufe des erfindungsgemäßen Verfahrens wird das in Stufe b) erhaltene zerkleinerte Produkt in fester Phase nachkondensiert, bis das Molekulargewicht des Thermoplasten den gewünschten Wert erreicht hat.

Diese Nachkondensation in fester Phase erfolgt bevorzugt unter Inertgasatmosphäre (vorzugsweise Stickstoff oder Wasserdampf) bei Temperaturen oberhalb von 140°C, mindestens jedoch 10°, vorzugsweise 20° unterhalb des Schmelzpunkts des Thermoplasten.

Die Viskositätszahl des Polymeren wird im Verlauf der Nachbehandlung in Stufe c) im allgemeinen um mindestens 30 Einheiten, vorzugsweise um mindestens 50 Einheiten erhöht. Die Viskositätszahl VZ des Endprodukts liegt im allgemeinen im Bereich von 120 bis 500 (gemessen unter gleichen Bedingungen wie bei den Ausgangspolymeren), vorzugsweise von 130 bis 300 und besonders bevorzugt 135 bis 250.

Die Schmelzviskosität des Thermoplasten (gemessen bei einer Temperatur von 20°C über dem Schmelzpunkt und bei einem Schergefälle von 1 000 s⁻¹), die in Stufe a) maximal 30 Pas beträgt, erhöht sich bei der Nachkondensation auf Werte von mehr als 80, vorzugsweise mehr als 100 und insbesondere mehr als 120 Pas.

Thermoplaste welche üblicherweise im Spritzguß verwendet werden, weisen im allgemeinen eine Viskositätszahl im Bereich von 140 bis 170 ml/g auf, während bei Einstellungen für Extrusion bzw. Blasformen auch höhere Viskositätszahlen möglich sind.

Der Zeitraum der Nachkondensation in fester Phase hängt u.a. vom gewünschten Molekulargewicht des Thermoplasten und der angewandten Temperatur sowie der Äquivalenz der Endgruppen ab und liegt im allgemeinen im Bereich von 0,5 bis 50 h, vorzugsweise 2 bis 40 h und insbesondere 3 bis 36 h. Durch Zusatz eines geeigneten Katalysators, z.B. Phosphorsäure, phosphorige Säure, hypophosphorige Säure und deren Salzen oder Alkyl- oder Arylestern kann die Nachkondensationszeit verkürzt werden.

Nach dem erfindungsgemäßen Verfahren sind neue Produkte zugänglich, die bislang aus dem Stand der Technik nicht bekannt waren.

Zum einen sind dies thermoplastische Formmassen auf der Basis von Thermoplasten mit sehr hohen Füllstoffgehalten. Mit den aus dem Stand der Technik (Einarbeitung in viskose Schmelzen) bekannten Verfahren lassen sich Füllstoffgehalte von maximal 50 bis 55 Gew.-% erreichen; höhere Füllstoffgehalte gehalte ergeben aufgrund der auftretenden hohen Scherkräfte aufgeschäumte, unregelmäßige Granulate sowie Probleme durch häufige Störungen des Konfektioniervorgangs (insbesondere Strangabrisse bei der Extrusion). Außerdem werden die Füllstoffe unzureichend dispergiert, was zu unbefriedigenden mechanischen Eigenschaften führt. Bei Füllstoffgehalten über 60 Gew.-% ist eine Konfektionierung nicht mehr möglich, da der Strang bei der Extrusion praktisch sofort abreißt. Füllstoffgehalte von mehr als 60 Gew.-% sind nur von niedrigviskosen Systemen wie Thermoset-Harzen bekannt. Thermoplastschmelzen ähnlicher Viskosität sind nur zu erreichen, wenn die Verarbeitungstemperatur extrem hoch (was zum Abbau der Polymere führt) oder das Molekulargewicht des Polymeren sehr niedrig gewählt wird (was zu unbefriedigenden mechanischen Eigenschaften führt).

Nach dem erfindungsgemäßen Verfahren sind demgegenüber auf verfahrenstechnisch einfache Weise thermoplastische Formmassen zugänglich, die 10 bis 45 Gew.-% Thermoplaste, vorzugsweise Polyamide (mit der Ausnahme von Polyamid-4,6), Polyester oder flüssigkristalline Polymere und entsprechend 55 bis 90 Gew.-% an Füllstoffen enthalten. Die Lösungsviskosität der Thermoplaste in diesen Formmassen liegt dabei vorzugsweise im Bereich von 120 bis 200, insbesondere 130 bis 180 ml/g. Derartige Produkte sind aus dem Stand der Technik nicht bekannt.

Eine zweite Gruppe von diesen Verbindungen sind füllstoffhaltige Thermoplaste mit hohem Molekulargewicht bzw. hohen Viskositätszahlen des Thermoplasten im Endprodukt und faserförmigen bzw. grobteiligen Füllstoffen.

Bei der Konfektionierung von Thermoplasten mit Viskositätszahlen von mehr als 150, insbesondere mehr als 180 ml/g und besonders mehr als 230 ml/g auf einem Extruder mit Füllstoffen tritt ein Molekulargewichtsabbau ein, der umso stärker ausgeprägt ist, je höher der Füllstoffanteil und je höher das Ausgangsmolekulargewicht des Thermoplasten ist. Dadurch ist das maximale Molekulargewicht, das beim Konfektionieren von Thermoplasten mit verstärkenden Füllstoffen erreicht werden kann, begrenzt.

Werden Thermoplaste mit höherem Molekulargewicht konfektioniert, tritt grundsätzlich ein Abbau bis zu diesem maximalen Molekulargewicht ein.

Die nach dem erfindungsgemäßen Verfahren erhältlichen Produkte zeichnen sich durch gute mechanische Eigenschaften aus und lassen sich daher vorteilhaft für die Herstellung von Formkörpern und Folien verwenden.

Insbesondere thermoplastische Formmassen mit faserförmigen Füllstoffen zeigen aufgrund der guten Faserlängenverteilung und der größeren Faserlänge gegenüber aus dem Stand der Technik bekannten Produkten durch gute mechanische Eigenschaften aus.

### Beispiele

Die Viskositätszahlen (VZ) der in den Beispielen eingesetzten Polyamide wurden jeweils in 0,5 %iger Lösung in 96 %iger H₂SO₄ bei 25°C bestimmt.

Die Zugfestigkeit wurde nach DIN 53 455, die Schlagzähigkeit aₙ nach DIN 53 453, die Schädigungsarbeit Wₛ nach DIN 53 443 an Rundscheiben (d=60 mm, 2 mm Dicke) der Elastizitätsmodul nach DIN 53 457, die Kerbschlagzähigkeit nach DIN 53 453-K und die Izod-Werte nach ISO 180/4A bestimmt.

### Beispiele 1 bis 10

Es wurden folgende Komponenten eingesetzt:
- PA/1:: Polyhexamethylenadipinsäureamid, VZ = 54; Schmelzviskosität bei 275°C und 1 000 s⁻¹ = 10 Pas (gemessen mit Hochdruckkapillarviskosimeter)
- PA*/1 a,b,c:: Polyhexymethylenadipinsäureamide mit folgenden Schmelzviskositäten bei 275°C, gemessen wie bei PA/1
1a: 130 Pas
1b: 115 Pas
1c: 105 Pas
- PA/2:: Copolyamid aus 45 Gew.-% Terephthalsäure/Hexamethylendiamin und 55 Gew.-% Adipinsäure/Hexamethylendiamin, VZ = 48, hergestellt nach EP-A 299 444; Schmelzviskosität bei 317°C und 1 000 s⁻¹:11 Pas
- PA*/2:: Copolyamid mit einer Zusammensetzung entsprechend PA/2, aber einer Schmelzviskosität von 153 Pas bei 317°C (gemessen wie bei PA/2), entsprechend einer Viskositätszahl von 154 ml/g.
- F/1:: Schnittglasfaser mit einer Faserlänge von 4,5 mm und einem Faserdurchmesser von 10 µm; Aminosilan-Schlichte (Gevetex® 5135)
- F/2:: Kohlenstoff-Schnittfaser mit einer Faserlänge von 6 mm und einem Faserdurchmesser von 6,7 µm (Celion® C6N der Celion Carbon Fibers)

In den erfindungsgemäßen Beispielen 1, 4, 7 und 9 wurden die Polyamide PA/1 bzw. PA/2 in einem Zweiwellenextruder (ZSK 40 der Fa. Werner & Pfleiderer) bei einer Drehzahl von 200 min⁻¹ und einem Durchsatz von 25 kg/h aufgeschmolzen, die Fasern F/1 bzw. F/2 zugegeben, die Mischung extrudiert, abgekühlt und granuliert. Anschließend wurden die so erhaltenen Produkte in fester Phase unter Stickstoff bei 160°C (PA/1) bzw. 200°C (PA/2) nachkondensiert bis die in der Tabelle angegebenen VZ erreicht werden. In den Vergleichsbeispielen 2, 5, 8 und 10 wurden F/1 bzw. F/2 direkt in ein entsprechendes Polyamid (PA*) mit der angegebenen Viskositätszahl eingearbeitet.

In den Vergleichsbeispielen 3 und 6 wurde die letzte Stufe (Nachkondensation) des erfindungsgemäßen Verfahrens nicht durchgeführt.

Die Zusammensetzung der Mischungen und die Ergebnisse der Messungen sind Tabelle 1 und Tabelle 2 zu entnehmen.

**Tabelle 1**

| Bsp. Nr. | Polyamid [Gew.-%] | Füllstoff [Gew.-%] | VZ des Polyamids | | |
|---|---|---|---|---|---|
| | | | Ausgangsmaterial | nach Konfektionieren | nach Tempern |
| 1 | 70 PA/1 | 30 F/1 | 54 | 59 | 154 |
| 2V | 70 PA*/1a | 30 F/1 | 150 | 146 | - |
| 3V | 70 PA/1 | 30 F/1 | 54 | 59 | - |
| 4 | 80 PA/1 | 20 F/2 | 54 | 58 | 137 |
| 5V | 80 PA*/1b | 20 F/2 | 140 | 140 | - |
| 6V | 80 PA/1 | 20 F/2 | 54 | 58 | - |
| 7 | 65 PA/2 | 35 F/1 | 48 | 59 | 148 |
| 8V | 65 PA*/2 | 35 F/1 | 154 | 145 | - |
| 9 | 60 PA/1 | 40 F/2 | 54 | 62 | 133 |
| 10V | 60 PA*/1c | 40 F/2 | 133 | 130 | - |
| V = Vergleichsbeispiel | | | | | |

**Tabelle 2**

| Eigenschaften der Produkte | | | | |
|---|---|---|---|---|
| Bsp. | Faserlänge [µm] | Zugfestigkeit trocken [MPa] | E-Modul [MPA] | Schlagzähigkeit 23°C, kJ/m² |
| 1 | 348 | 210 | 10900 | 53 |
| 2V | 252 | 194 | 10000 | 40 |
| 3V | 348 | 98 | 10750 | 8 |
| 4 | 319 | 225 | - | 38 |
| 5V | 191 | 201 | - | 30 |
| 6V | 319 | 103 | - | 7 |
| 7 | 325 | 226 | 13130 | 60 |
| 8V | 218 | 197 | 12090 | 51 |
| 9 | 282 | 272 | 26900 | 32 |
| 10V | 157 | 245 | 24500 | 28 |
| V = Vergleichsbeispiel | | | | |

### Beispiel 11 bis 18

Es wurden folgende Komponenten eingesetzt:
- Polyamid:: Polyhexamethylenadipinsäureamid mit der jeweils in Tabelle 3 angegebenen Viskositätszahl bzw. Schmelzviskosität (Messung wie bei Bsp. 1 bis 10 angegeben)
- Füllstoff:: F/1 aus den Beispielen 1 bis 10

70 Gew.-% des jeweiligen Polyamids wurden in einer ZSK 40 (wie in Bsp. 1 bis 10) aufgeschmolzen und in die Schmelze bei 280°C der Füllstoff (30 Gew.-%) eingebracht. Nach Extrusion, Abkühlen und Granulierung wurde bei den erfindungsgemäßen Beispielen in fester Phase auf die angegebenen VZ-Zahlen nachkondensiert. Die Ergebnisse sind der Tabelle 3 zu entnehmen.

Die Ergebnisse zeigen, daß nach dem erfindungsgemäßen Verfahren VZ des Polyamids erreichbar sind, die nach dem Stand der Technik nicht erreichbar sind.

**Tabelle 3**

| Bsp. Nr. | VZ Polyamid | | | Faserlänge [µm] | E-Modul [MPa] | Schlagzähigkeit 23°C, kJ/m² |
|---|---|---|---|---|---|---|
| | Ausgangsmat. | nach Konfekt. | nach Tempern | | | |
| 11 | 55/10¹⁾ | 59 | 136 | 348 | 11100 | 42 |
| 12 | 55/10¹⁾ | 59 | 154 | 348 | 10900 | 53 |
| 13 | 55/10¹⁾ | 59 | 185 | 348 | 11400 | 62 |
| 14 | 55/10¹⁾ | 59 | 214 | 348 | 10800 | 64 |
| 15V | 135/105¹⁾ | 138 | - | 239 | 10400 | 42 |
| 16V | 150/130¹⁾ | 146 | - | 252 | 10000 | 40 |
| 17V | 187/250¹⁾ | 152 | - | 211 | 10000 | 46 |
| 18V | 205/400¹⁾ | 144 | - | 176 | 9600 | 44 |
| V = Vergleichsbeispiel | | | | | | |

| | | | | | | |
|---|---|---|---|---|---|---|
| ¹⁾ = Schmelzviskosität in Pas, bei 275°C und 1 000 s⁻¹ | | | | | | |

### Beispiele 19 bis 45

In diesen Beispielen werden Polyamide mit hohen Füllstoffgehalten nach dem erfindungsgemäßen Verfahren hergestellt.

Dabei wurden die in Tabelle 4 angegebenen Mengen an Polyamid in einem Zweiwellenextruder (ZSK 53 der Fa. Werner & Pfleiderer) aufgeschmolzen und bei 280°C (PA/3) bzw. 320°C (PA/4) die Füllstoffe eingearbeitet. Der Durchsatz betrug 30 kg/h, die Drehzahl des Extruders 160 min⁻¹.

Nach erfolgter Abmischung wurden die Produkte ausgetragen, verstrangt, mit Wasser abgekült, granuliert und 8 h bei 80°C im Vakuum getrocknet.

Bei den erfindungsgemäßen Beispielen wurde anschließend 16 h bei 170°C (PA/3) bzw. 12 h bei 190°C (PA/4) mit überhitztem Wasserdampf getempert.

Aus den Produkten wurden im Spritzguß bei 280°C (PA/3) bzw. 320°C (PA/4) Probekörper hergestellt und daran die Biegefestigkeit nach DIN 53 452 und die Zugfestigkeit nach DIN 53 455-3. Die Bestimmung des Schnittgewichts erfolgte durch Wiegen von 1 000 ml Granulat (nach mechan. Rütteln). Das Drehmoment wurde in % des maximalen Drehmoments des Extruders bestimmt.

Es wurden folgende Komponenten eingesetzt:
- PA/3:: Polyhexamethylenadipinsäureamid, VZ = 54; Schmelzviskosität 10 Pas (gemessen wie bei PA/1)
- PA*/3:: Polyhexamethylenadipinsäureamid, VZ = 144; Schmelzviskosität 144 Pas (Ultramid® A3 der BASF)
- PA/4:: Copolyamid aus 70 Gew.-% Terephthalsäure/Hexamethylendiamin und 30 Gew.-% ε-Caprolactam, hergestellt nach EP-A 299 444; Schmelzviskosität (317°C, 1 000 s⁻¹) 20 Pas, VZ = 54
- PA*/4:: chemische Zusammensetzung wie PA/4, VZ = 130 ml/g und Schmelzviskosität 200 Pas
- F/1:: wie bei Bsp. 1 bis 10 beschrieben
- F/3:: calcinierter Kaolin, mittlerer Durchmesser 1,2 µm, mit einer Aminosilan-Schlichte (Polarite® 102A von English China Clay)

Das Drehmoment ist in %, bezogen auf das maximale Drehmoment des Extruders angegeben.

Die Zusammensetzung der Massen und die Ergebnisse der Messungen sind Tabelle 4 zu entnehmen.

**Tabelle 4**

| Bsp. Nr. | Polyamid [Gew.-%] | Füllstoff [Gew.-%] | VZ nach Tempern ml/g | Zugfestigkeit MPa | Biegefestigkeit MPa | Schüttgewicht g/l | Drehmoment % des Maximalwerts |
|---|---|---|---|---|---|---|---|
| 19 | 55 PA/3 | 45 F/1 | 145 | 232 | - | 720 | 38 |
| 20 | 50 PA/3 | 50 F/1 | 141 | 245 | - | 740 | 40 |
| 21 | 45 PA/3 | 55 F/1 | 152 | 270 | - | 680 | 43 |
| 22 | 40 PA/3 | 60 F/1 | 150 | 260 | - | 660 | 42 |
| 23 | 35 PA/3 | 65 F/1 | 140 | 245 | - | 530 | 43 |
| 24 | 30 PA/3 | 70 F/1 | 155 | 232 | - | 410 | 46 |
| 25V | 55 PA*/3 | 45 F/1 | - | 225 | - | 670 | 50 |
| 26V | 50 PA*/3 | 50 F/1 | - | 230 | - | 670 | 58 |
| 27V | 45 PA*/3 | 55 F/1 | - | 230 | - | 570 | 62 |
| 28V | 40 PA*/3 | 60 F/1 | - | 216 | - | 400 | 70 |
| 29V | 35 PA*/3 | 65 F/1 | - | x¹⁾ | - | x¹⁾ | 80²⁾ |
| 30V | 30 PA*/3 | 70 F/1 | - | x¹⁾ | - | x¹⁾ | 80²⁾ |
| 31 | 50 PA/3 | 50 F/3 | 144 | - | 165 | 870 | 40 |
| 32 | 45 PA/3 | 55 F/3 | 138 | - | 172 | 910 | 38 |
| 33 | 40 PA/3 | 60 F/3 | 154 | - | 184 | 960 | 40 |
| 34 | 35 PA/3 | 65 F/3 | 153 | - | 189 | 1020 | 49 |
| 35 | 30 PA/3 | 70 F/3 | 142 | - | 193 | 1100 | 50 |
| 36V | 50 PA*/3 | 50 F/3 | - | - | 158 | 730 | 52 |
| 37V | 45 PA*/3 | 55 F/3 | - | - | 160 | 520 | 65 |
| 38V | 40 PA*/3 | 60 F/3 | - | - | x¹⁾ | x¹⁾ | 80²⁾ |
| 39V | 35 PA*/3 | 65 F/3 | - | - | x¹⁾ | x¹⁾ | 80²⁾ |
| 40 | 55 PA/4 | 45 F/1 | 138 | 260 | - | 710 | 43 |
| 41 | 50 PA/4 | 50 F/1 | 146 | 273 | - | 685 | 43 |
| 42 | 45 PA/4 | 55 F/1 | 151 | 281 | - | 640 | 45 |
| 43V | 55 PA*/4 | 45 F/1 | - | 258 | - | 480 | 54 |
| 44V | 50 PA*/4 | 50 F/1 | - | 262 | - | 410 | 77 |
| 45V | 45 PA*/4 | 55 F/1 | - | x¹⁾ | - | x¹⁾ | x¹⁾ |
| V = Vergleichsbeispiel | | | | | | | |

| | | | | | | | |
|---|---|---|---|---|---|---|---|
| ¹⁾ = Material nicht konfektionierbar, da Strangabrisse | | | | | | | |
| ²⁾ = nicht genau meßbar, da starke Schwankungen | | | | | | | |

## Patentansprüche

1. Verfahren zur Herstellung füllstoffhaltiger thermoplastischer Formmassen durch Abmischung von Füllstoffen mit Thermoplasten in der Schmelze, dadurch gekennzeichnet, daß man
a) die Füllstoffe in einer Mischvorrichtung in der Schmelze mit einem niedermolekularen Thermoplasten mit einer Schmelzviskosität von maximal 30 Pas (gemessen bei einer Temperatur von 20°C über dem Schmelzpunkt des Thermoplasten und einem Schergefälle von 1 000 s⁻¹) mischt,
b) das so erhaltene Produkt aus der Mischvorrichtung austrägt, abkühlt und zerkleinert und
c) anschließend das zerkleinerte Produkt in fester Phase einer Nachkondensation unterwirft.

2. Verfahren nach Anspruch 1, dadurch gekennzeichnet, daß man als Mischvorrichtung in Schritt a) einen Extruder verwendet.

3. Thermoplastische Formmassen, enthaltend 10 bis 45 Gew.-% eines Polyesters oder eines Polyamids oder deren Mischungen und 55 bis 90 Gew.-% faser- oder teilchenförmige Füllstoffe mit der Maßgabe, daß die Formmasse kein Polyamid-4,6 enthält.

4. Verwendung der thermoplastischen Formmassen gemäß Anspruch 3 oder wie gemäß dem Verfahren nach Anspruch 1 erhalten, zur Herstellung von Folien und Formkörpern.

5. Formkörper aus thermoplastischen Formmassen gemäß Anspruch 3 oder wie nach Anspruch 1 erhalten.

## Claims

1. A process for producing a filler-containing thermoplastic molding composition by mixing fillers with thermoplastics in the melt, characterized in that
a) the fillers are mixed in a mixing apparatus in the melt with a low molecular weight thermoplastic having a melt viscosity of at most 30 Pas (measured at 20°C above the melting point of the thermoplastic and at a shear gradient of 1,000 s⁻¹),
b) the product thus obtained is removed from the mixing apparatus, cooled and comminuted, and
c) the comminuted product is then subjected in the solid phase to a post-condensation.

2. A process as claimed in claim 1, characterized in that an extruder is used as mixing apparatus in stage a).

3. A thermoplastic molding composition containing 10 to 45% by weight of a polyester or a polyamide or a mixture thereof, and 55 to 90% by weight of a fibrous or particulate filler, with the proviso that the molding composition does not contain polymide-4,6.

4. The use of a thermoplastic molding composition as claimed in claim 3 or obtained by the process of claim 1 for the production of films and molded articles.

5. A molded article produced from a thermoplastic molding composition as claimed in claim 3 or obtained as claimed in claim 1.

## Revendications

1. Procédé pour préparer des compositions de moulage thermoplastiques contenant des agents de charge par mélange d'agents de charge à des matières thermoplastiques en fusion, caractérisé
a) en ce qu'on mélange les agents de charge dans un dispositif de mélange en fusion à une matière thermoplastique à faible poids moléculaire avec une viscosité en fusion d'au maximum 30 Pas (mesurée à une température de 20 °C au-dessus du point de fusion de la matière thermoplastique et à un gradient de cisaillement de 1000 s⁻¹),
b) en ce qu'on décharge le produit ainsi obtenu du dispositif de mélange, en ce qu'on le refroidit et en ce qu'on le broie, et
c) en ce qu'on soumet ensuite le produit broyé à une recondensation en phase solide.

2. Procédé selon la revendication 1, caractérisé en ce qu'on utilise, à titre de dispositif de mélange à l'étape a), une extrudeuse.

3. Compositions de moulage thermoplastiques, contenant 10 à 45 % en poids d'un polyester ou d'un polyamide ou de leurs mélange et 55 à 90 % en poids d'agents de charge fibreux ou particulaires, sous condition que la composition de moulage ne contienne pas de polyamide-4,6.

4. Utilisation des compositions thermoplastiques selon la revendication 3, ou obtenues suivant le procédé selon la revendication 1, pour préparer des films ou des objets moulés.

5. Objets moulés à partir de compositions de moulage thermoplastiques selon la revendication 3, ou obtenues selon la revendication 1.
